(19) Europäisches Patentamt / European Patent Office / Office européen des brevets

(11) **EP 2 376 969 B1**

(12) **FASCICULE DE BREVET EUROPEEN**

(45) Date de publication et mention
de la délivrance du brevet:
**19.03.2014 Bulletin 2014/12**

(21) Numéro de dépôt: **09768065.6**

(22) Date de dépôt: **09.12.2009**

(51) Int Cl.:
**G02B 5/32** *(2006.01)*          **G02B 27/01** *(2006.01)*
**G03H 1/04** *(2006.01)*          **G02B 27/00** *(2006.01)*

(86) Numéro de dépôt international:
**PCT/EP2009/066776**

(87) Numéro de publication internationale:
**WO 2010/066818 (17.06.2010 Gazette 2010/24)**

(54) **COMBINEUR DIFFRACTIF POUR AFFICHAGE MULTICOLORE ET MONOCHROME, PROCÉDÉ DE FABRICATION ET DISPOSITIF D'AFFICHAGE TÊTE HAUTE L'UTILISANT**

BEUGENDER KOMBINIERER FÜR EIN MEHRFARBEN- UND MONOCHROMDISPLAY, HERSTELLUNGSVERFAHREN UND HEAD-UP-DISPLAYEINRICHTUNG DAMIT

DIFFRACTIVE COMBINER FOR MULTICOLOUR AND MONOCHROME DISPLAY, PRODUCTION METHOD, AND HEAD-UP DISPLAY DEVICE USING SAME

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **09.12.2008 EP 08171134**
**10.12.2008 EP 08171219**

(43) Date de publication de la demande:
**19.10.2011 Bulletin 2011/42**

(73) Titulaires:
• **Delphi Technologies, Inc.**
**Troy, MI 48007 (US)**
• **Université de Strasbourg**
**67081 Strasbourg (FR)**

(72) Inventeurs:
• **MOUSSA, Hassan**
**F-67400 Illkirch (FR)**
• **TUPINIER, Laurent**
**F-67116 Reichstett (FR)**
• **EL HAFIDI, Idriss**
**F-67100 Strasbourg (FR)**
• **NDAO, Mandiaye**
**F-67200 Strasbourg (FR)**

(74) Mandataire: **Robert, Vincent et al**
**Delphi France SAS**
**Bât. le Raspail - ZAC Paris Nord 2**
**22, avenue des Nations**
**CS 65059 Villepinte**
**95972 Roissy CDG Cedex (FR)**

(56) Documents cités:
**WO-A1-98/12582       WO-A2-2006/135587**
**JP-A- 10 048 562       US-A- 4 874 213**
**US-A- 6 005 714       US-A1- 2005 200 962**

• **COWAN J J: "Embossed volume holograms: the Aztec structure", 19890101, 1 January 1989 (1989-01-01), pages 38-44, XP006511987,**

**Description**

La présente invention concerne un dispositif d'affichage tête haute pour véhicule automobile, et plus particulièrement un procédé de fabrication d'un combineur diffractif utilisé dans un tel dispositif d'affichage.

Ce genre de dispositifs, comportant typiquement une unité de projection qui produit un faisceau lumineux destiné à être dirigé vers un combineur diffractif en vue de projeter des images, notamment des informations de fonctionnement ou de conduite du véhicule sous la forme d'une image virtuelle située dans le champ de vision du conducteur, était initialement réalisé en utilisant des technologies dérivées d'applications aéronautiques. Leurs coûts de fabrication sont dès lors souvent importants, de nature à empêcher leur commercialisation et leur installation à plus grande échelle sur des véhicules de gamme basse ou moyenne.

Lesdits coûts résultent notamment des technologies utilisées, compliquées à mettre en oeuvre, et qui ne permettent de surcroît pas toujours une réplication en masse des combineurs avec une garantie suffisante de stabilité des caractéristiques optiques. C'est par exemple le cas pour le dispositif divulgué dans le document JP-1 004 8562, décrivant un système relevant d'un hologramme à modulation d'indices, dont la fabrication est basée sur l'utilisation de plaques photosensibles réalisées à partir d'une couche photosensible à base de gélatine déposée sur un substrat jouant le rôle de support mécanique. Un tel composant ne peut être fabriqué qu'à l'unité, car il implique un enregistrement réalisé de façon individualisée, et il n'a pas vocation à une fabrication de masse à un coût industriel raisonnable. Le composant holographique réalisé sur ce type de plaques photosensibles est au surplus sensible aux rayonnements UV, susceptibles de l'altérer, sauf à ajouter des couches protectrices. C'est également le cas pour le système divulgué dans le document EP-0467328, montrant un combineur à traitement optique volumique fabriqué sur la base de gélatines, et nécessitant plusieurs couches holographiques interagissant avec plusieurs longueurs d'onde, ce qui rend encore plus aléatoire la reproduction fiable des caractéristiques optiques du système. Ce système ne travaille de surcroît qu'en réflexion.

Un système fonctionnant en réflexion avec plusieurs longueurs d'onde est aussi décrit dans le document US4930847, avec un procédé d'enregistrement utilisant à chaque fois une géométrie et une longueur d'onde différentes, basées sur des matériaux photosensibles de type gélatine présentant les limitations exposées ci-dessus.

Une autre structure à au moins deux couches est décrite dans le brevet US-6 00 57 14, la multiplication des couches augmentant la difficulté de maintenir, lors d'une fabrication de masse, une stabilité correcte de la fonction optique à assurer. Le combineur multicouches à structures diffractives multiniveau décrit dans ce document est fabriqué par calcul effectué par ordinateur, et souffre des limitations de traitement des ordinateurs, ne permettant que des dimensions de combineur réduites pour un nombre fini de niveaux des structures diffractives, lesquels ne permettant que d'approximer les fonctions optiques désirées.

Une fabrication résultant de calculs par ordinateur est également décrite dans un document WO-2004/09090607 qui propose un élément diffractif qui diffracte la lumière en plusieurs ordres, superposant l'ordre zéro de diffraction de la lumière ambiante à l'ordre 1 de diffraction, et nécessite en particulier un système optique de restitution complexe.

Le document US 2005/0200962 décrit un système d'affichage à tête haute ayant un combineur diffractif réalisé par interférences.

La présente invention remédie à ces insuffisances, et propose une solution qui permet la fabrication en grande série d'un combineur monocouche par un procédé opérant très simplement et de manière surfacique sur une plaque en matière plastique transparente.

Le procédé de fabrication de l'invention est classiquement réalisé par nano-lithographie par interférence laser, et il permet plus précisément la production en série d'un combineur diffractif monocouche utilisé dans un dispositif d'affichage tête haute pour véhicule automobile comportant une unité de projection dotée d'un afficheur rétro-éclairé par $n \geq 1$ source(s) lumineuse(s) de longueur(s) d'onde $\lambda_i$, i=1 à n, éclairant au moins une zone dudit afficheur, et envoyant un faisceau lumineux vers ledit combineur avec un angle $\Theta_p$. Il comprend classiquement les étapes de la revendication 1.

Le combineur réalisé par ce procédé permet la restitution d'une image virtuelle en une seule couleur, lorsque n=1, ou en plusieurs couleurs lorsque n>1.

En fait, la première étape du procédé consiste en la réalisation d'une matrice pour la fabrication ultérieure de moules permettant la fabrication en grandes séries. Cette matrice est constituée d'un substrat, en matériau rigide, sur lequel est déposée une couche photosensible sensible à la longueur d'onde de la source laser utilisée, qui est toujours la même, seul l'angle entre les deux faisceaux étant modifié d'une étape à l'autre.

Classiquement, les deux faisceaux lumineux provenant de la même source sont envoyés sur la surface plane de la couche photosensible, provoquant des franges d'interférence sur la totalité de la surface à exposer. L'existence de ces interférences conduit à une insolation variable de la surface de la couche photosensible, qui est ensuite soumise à une substance chimique ayant la propriété de dissoudre la matière selon son degré d'insolation. Il se produit par conséquent une gravure chimique, dans la mesure où les franges d'interférence se transforment en variations de relief après dissolution de certaines parties de la couche de matériau photosensible exposée.

L'exposition sous une pluralité d'angles (pour l'un des deux faisceaux) conduit en l'occurrence à la possibilité de fabrication d'un combineur à réseau multiplexé en surface, capable de restituer des couleurs distinctes non superposées, à partir d'un faisceau incident issu d'un dispositif de projection distinguant des zones de couleurs différentes.

Ensuite, la surface en relief fait l'objet d'un dépôt d'une couche mince conductrice, permettant par la suite d'appliquer des procédés d'électroforming pour obtenir un moule. Ce dernier est enfin utilisé pour transférer la structure diffractive en relief sur un élément en matière plastique transparente par des moyens de production en masse tels que l'embossage ou l'injection. Il est ainsi possible d'obtenir un combineur monocouche en plastique transparent, dont les structures diffractives sont gravées sur la surface, et sont en réalité des réseaux diffractifs de surface en relief. Un tel mode de fabrication permet une grande stabilité des caractéristiques optiques, le composant (combineur) diffractif étant au surplus pérenne dans le temps, puisque consistant en un simple support plastique monomatériau dont les reliefs surfaciques sont obtenus par embossage, ou directement lors de la fabrication du composant par moulage, la reproduction des reliefs étant alors uniforme et homogène.

L'utilisation d'une onde sphérique, outre la possibilité d'obtenir toutes les fonctionnalités optiques nécessaires pour la fonction vision tête haute, permet de s'affranchir de la fonction lentille à la sortie du système de projection classiquement utilisée dans les dispositifs d'affichage tête haute pour véhicules automobiles. L'interférence de l'onde sphérique avec une onde plane, en créant un réseau diffractif à pas variable avec des lignes de franges courbes, permet d'utiliser tout faisceau en sortie de l'unité de projection, sans nécessité de le collimater. Les franges obtenues sont courbes, concentriques autour d'un point central. Elles permettent d'obtenir un agrandissement constant de l'image virtuelle.

L'unité de projection comporte au moins une source lumineuse produisant un faisceau lumineux de projection dirigé vers un afficheur prévu pour former une image source transmise vers le combineur diffractif. L'image source est diffractée par transmission ou réflexion à travers le combineur, pour produire l'image virtuelle du côté opposé au conducteur par rapport au combineur.

Un composant réfractif comportant une face plane orientée perpendiculairement à l'axe du faisceau à onde sphérique et une face courbe à différents rayons de courbure est placé sur le trajet du faisceau à onde sphérique, de manière à créer des zones à agrandissement variable sur le combineur diffractif. L'agrandissement est en effet d'une part contrôlé par le rayon de courbure de l'onde sphérique, et d'autre part par la distance séparant l'unité de projection du combineur.

Ce composant réfractif est introduit dans le trajet du faisceau de l'onde sphérique, et la modifie. Il présente à cet effet une face courbe dont le profil est calculé numériquement pour permettre de changer le front d'onde sphérique, et aussi pour corriger d'éventuelles aberrations et distorsions. Ce profil peut enfin être prévu pour modifier l'onde sphérique à front d'onde provenant d'un seul point en plusieurs ondes sphériques dont les points de convergence sont différents. L'interférence de ces différents fronts d'onde avec l'onde plane va alors générer un ensemble de franges ayant des rayons de courbures différents. Sur le combineur, cela conduira à produire des ensembles de franges distincts répartis sur différentes zones, chaque zone correspondant alors à un ensemble de franges courbes ayant un point central différent de celui des autres franges situées dans les autres zones.

La possibilité d'agrandissement contrôlé par zone est avantageuse dans la mesure où le combineur final, du fait des modulations apportées à l'un des faisceaux incidents, pourra comporter plusieurs zones réalisant des agrandissements différents des signaux. Ces zones peuvent le cas échéant être combinées avec des couleurs différentes, certaines informations plus importantes pour le conducteur pouvant alors être affichées dans son champ de vision avec une couleur et une taille plus discriminantes.

Les courbures de ce composant réfractif sont calculées mathématiquement pour contrôler les différents niveaux d'agrandissement sur les zones précitées du combineur. A partir d'une génération par ordinateur de cet élément réfractif, il peut ensuite être fabriqué en matière plastique sensiblement rigide ou en verre. La matrice résultant du procédé détaillé auparavant sera dès lors à agrandissement variable, de même que le combineur en plastique obtenu en fin de procédé, fonction qui s'ajoute aux autres fonctions optiques du combineur.

Par ailleurs, selon une possibilité, le substrat solide de la matrice sur lequel est effectué le dépôt de matière photosensible peut être en verre ou en quartz, et le moule utilisé pour transférer la structure diffractive en relief sur un élément en plastique peut par exemple être prévu en nickel.

Ledit transfert s'effectue par des moyens de production en série, comme on l'a mentionné auparavant, par exemple du type embossage ou injection, ce que permet l'existence des réseaux diffractifs surfaciques.

Dans une configuration en réflexion, la matière plastique du combineur a de préférence un indice de réflexion permettant d'avoir un niveau de transparence supérieure à celle d'un pare-brise de véhicule. Le combineur peut en effet être placé contre le pare-brise, ou directement intégré dans la couche plastique d'un pare-brise, et les caractéristiques de réflexion sont alors supportées par le pare-brise et non pas par le combineur.

Dans le cas de la réflexion, l'image virtuelle placée dans le champ de vision du conducteur présente un niveau de luminance inférieur à celui obtenue dans une configuration à transmission, et il faut de plus augmenter l'efficacité de diffraction par contrôle de la profondeur du relief.

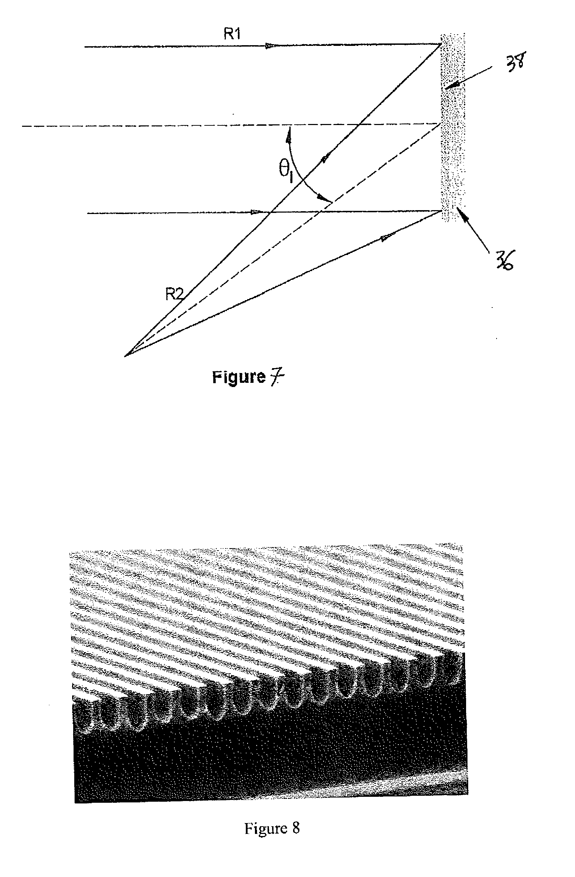

Cela se contrôle par une application de la substance chimique de gravure sur la couche photosensible pendant une durée qui détermine la profondeur des reliefs à obtenir. Pour une durée de gravure longue, les reliefs des franges sont d'allure pratiquement sinusoïdaux, alors qu'en cas d'application plus brève, les crêtes extérieures sont d'allure arasée, comme cela apparaît par exemple en figure 8.

Il est à noter que le contrôle de la profondeur de relief sur la surface de la matrice dépend également du temps de pose à l'enregistrement.

Selon une alternative dans laquelle les caractéristiques réfléchissantes ne sont pas supportées par exemple par le pare-brise, il peut également être possible d'ajouter au moins une couche réfléchissante déposée sur la surface diffractive du combineur.

Plus précisément encore, cette couche réfléchissante peut être choisie pour sa sélectivité par rapport à au moins une longueur d'onde des faisceaux lumineux.

Le nombre de couches réfléchissantes sélectives peut être identique au nombre de couleurs produites par l'unité de projection, elles sont alors superposées, chacune ne réfléchissant que la longueur d'onde qui lui correspond et étant transparente pour les autres.

Le procédé de l'invention permet finalement d'obtenir un combineur en matière plastique transparente sous la forme d'une plaque d'allure plane en plastique dont l'une des suifaces comporte des structures diffractives, ce qui permet de travailler à la fois en transmission et en réflexion, avec des efficacités de diffraction différentes comme cela a été mentionné auparavant.

L'invention concerne également un dispositif d'affichage, notamment apte à réaliser une fonction d'affichage tête haute pour véhicule automobile, comportant une unité de projection qui produit un faisceau lumineux destiné à être dirigé vers un combineur diffractif fabriqué selon le procédé décrit auparavant, permettant de projeter des images, notamment des informations de fonctionnement ou de conduite du véhicule sous la forme d'une image virtuelle située dans le champ de vision du conducteur.

Dans une hypothèse à plusieurs couleurs, l'unité de projection comporte un afficheur destiné à former des images source rétro-éclairées par des sources lumineuses d'au moins deux couleurs de longueurs d'onde distinctes, un composant diffractif générant une figure de rétro-éclairage délimitant au moins une zone de l'afficheur est placé en sortie de chaque source, perpendiculairement à l'axe du faisceau émis par la source, les zones délimitées n'étant rétro-éclairées que par une couleur.

Les composants diffractifs permettent en fait la mise en forme correcte de la figure de rétro-éclairage nécessaire, par exemple en vue d'éclairer certaines zones de l'afficheur en rouge (notamment les alertes), d'autres en vert (les informations liées à la vitesse, par exemple) et d'autres encore en bleu (informations relatives à la navigation).

Pour d'évidentes raisons configurationnelles en présence de plusieurs sources lumineuses dans le dispositif de projection, au moins une source lumineuse est orientée avec un angle $\alpha$ par rapport à la normale au plan de l'afficheur. Cette caractéristique est utilisée pour réduire les dimensions des composants diffractifs en vue de les produire par microfabrication.

Ces composants diffractifs placés en sortie des sources de lumière sont en effet des structures multiniveau, ce qui permet de réduire la puissance lumineuse concentrée dans l'ordre central en améliorant l'uniformité de l'éclairage tout en réduisant les pertes lumineuses (la totalité de l'énergie lumineuse est répartie dans une zone de l'afficheur).

Toutefois, la fabrication de ces éléments multiniveau implique de descendre à des détails de structures extrêmement bas lors de la microfabrication, ce qui est atténué si les sources, et par conséquent les composants diffractifs, présentent un angle par rapport à l'afficheur et à sa normale, puisque la fenêtre de Fourrier de calcul dudit élément est alors réduite d'un facteur cos $\alpha$ ce qui permet d'augmenter corrélativement la valeur de dimension critique de microfabrication.

Comme déjà mentionné, et il s'agit là d'un avantage majeur de l'invention, le combineur diffractif est réalisé sous la forme d'une plaque monomatériau transparente. Dans l'application particulière à l'affichage tête haute pour véhicule, au moins une face du combineur diffractif peut additionnellement être munie d'un revêtement ou d'une couche de protection.

De préférence, l'afficheur du dispositif de projection est un écran à cristaux liquides.

De préférence encore, le combineur comporte des éléments optiques diffractifs configurés pour positionner l'image virtuelle à une distance déterminée à l'avant du combineur avec un angle d'inclinaison précis par rapport à l'axe de vision du conducteur.

Selon une configuration possible, les sources de lumière sont des diodes produisant chacune un faisceau lumineux ayant une cohérence spatiale et temporelle, par exemple des diodes laser, et l'afficheur formant l'image source peut être muni d'une couche optique de diffusion ayant une ouverture angulaire prédéterminée.

L'invention va à présent être décrite plus en détail, en référence aux figures annexées, pour lesquelles

- la figure 1 est une vue schématique qui représente l'habitacle d'un véhicule automobile équipé d'un dispositif d'affichage tête haute fonctionnant en réflexion et conforme aux enseignements de l'invention ;
- la figure 2 est une vue similaire à la précédente pour un dispositif fonctionnant en transmission ;
- la figure 3 est une vue en coupe axiale qui représente schématiquement le fonctionnement de l'unité de projection équipant le dispositif d'affichage de la figure 1 ;
- la figure 4 est un schéma illustrant l'intérêt des composants diffractifs placés en sortie des sources lumineuses dans l'unité de projection ;

- la figure 5 est une vue en coupe axiale qui représente schématiquement un exemple de réalisation de l'unité de projection équipant le dispositif d'affichage de la figure 1 ;
- la figure 6 est une vue de face qui représente schématiquement les zones de l'afficheur équipant l'unité de projection de la figure 5 ;
- la figure 7 est un schéma illustrant le principe de réalisation d'un combineur diffractif par lithographie ;
- la figure 8 est une photographie au microscope montrant les éléments optiques diffractifs réalisés à la surface du combineur diffractif ; et
- la figure 9 est un schéma illustrant l'angle d'illumination par rapport à l'image virtuelle.

Dans la suite de la description, des éléments identiques ou similaires seront désignés par les mêmes références.

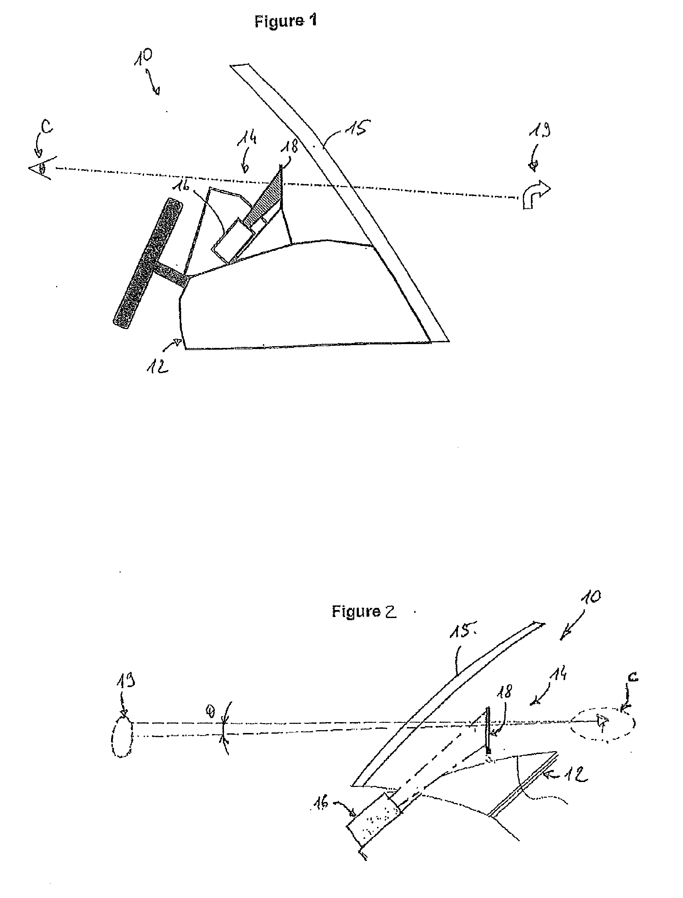

Sur la figure 1, on a représenté schématiquement l'intérieur d'un véhicule automobile 10 comportant un tableau de bord 12 et un dispositif d'affichage tête haute 14 réalisé conformément aux enseignements de l'invention. Selon le mode de réalisation représenté (en réflexion), le dispositif d'affichage tête haute 14 est agencé sur le tableau de bord 12, à proximité du pare-brise 15.

Le dispositif d'affichage tête haute 14 selon l'invention comporte une unité de projection 16 et un combineur diffractif 18 qui est situé dans l'axe de vision du conducteur C et qui est prévu pour afficher des informations de fonctionnement ou de conduite du véhicule sous la forme d'images virtuelles 19 positionnées à l'avant du pare-brise 15 dans le champ de vision du conducteur.

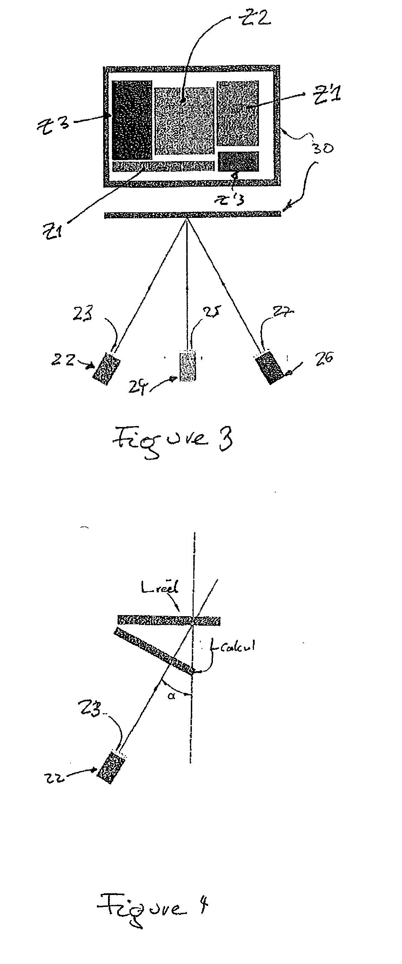

Selon l'exemple de réalisation représenté sur la figure 3, l'unité de projection 16 permet l'affichage d'informations en trois couleurs (par exemple bleu, rouge et vert) au moyen de trois sources lumineuses 22, 24, 26, de préférence des diodes laser émettant dans le domaine visible, qui produisent des faisceau lumineux mis en forme par des composants diffractifs 23, 25, 27 avant d'être diffusés vers un afficheur 30 formant l'image source. L'afficheur 30 est par exemple un écran à cristaux liquides, et il est représenté en vue de face au dessus du schéma intégrant les sources de lumière 22, 24, 26.

Les composants diffractifs de mise en forme 23, 25, 27 visent à produire des faisceaux lumineux de section adaptée à la forme de zones particulières délimitées dans l'afficheur 30. L'afficheur 30 est configuré pour produire des images sources représentant les informations de fonctionnement ou de conduite du véhicule. Il comporte des zones Z1, Z'1, Z2, Z3, Z'3 éclairées respectivement par les sources 22, 24, 26 de manière à transmettre des informations de nature variable en des couleurs différentes, le combineur 18 restituant dans l'image virtuelle 19 lesdites informations dans des zones d'affichages contigües. Les reliefs diffractifs multiplexés du combineur 18 traitent en effet le faisceau complexe émis par l'unité de projection 16 de façon différenciée selon la longueur d'onde incidente et restituent l'information, telle que rétro-éclairée dans l'unité de projection 16, dans l'image virtuelle 19.

Les composants diffractifs de mise en forme 23, 25, 27 sont des structures multiniveau. Ce choix technologique permet de réduire la puissance lumineuse concentrée dans l'ordre central, ce qui améliore l'uniformité de l'éclairage et réduit les pertes lumineuses puisque toute l'énergie lumineuse est répartie dans la zone de l'afficheur. La fabrication des éléments multiniveau nécessite de « descendre» à des détails de structure très bas lors de la microfabrication. Pour rendre la microfabrication de ces éléments possible, deux des sources 22, 26 apparaissant en figure 3 sont orientées avec une inclinaison donnée. Elles sont par exemple positionnées avec une inclinaison d'angle $\alpha$ (en valeur absolue) par rapport à la normale à l'afficheur 30. Cela permet de réduire la fenêtre de Fourier nécessaire pour le calcul de l'élément de mise en forme diffractif et par conséquence d'augmenter la valeur de la dimension critique de microfabrication de réseau multiniveau. La relation entre dimension sur l'afficheur et dimension du calcul (voir en figure 4) sera dans ce cas :

$$L_{calcul} = L_{réel} \cdot \cos\alpha$$

Cette technique permet alors d'utiliser la totalité de la zone sur l'afficheur 30 en utilisant un composant diffractif réalisé en utilisant des dimensions critiques facilement réalisable par microfabrication.

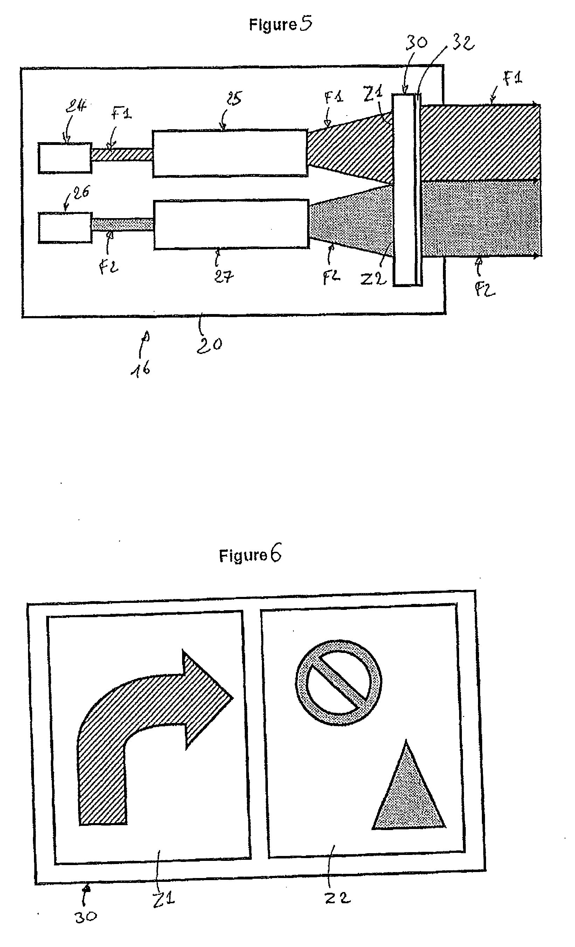

Selon l'exemple de réalisation représenté sur la figure 5, l'unité de projection 16 est montée à l'intérieur d'un boîtier 20. Le boîtier 20 contient en l'espèce deux sources lumineuses 24, 26 de couleurs différentes, de préférence des diodes laser émettant dans le domaine visible, qui produisent un premier faisceau lumineux F1 et un second faisceau lumineux F2 de longueurs d'ondes différentes. Les faisceaux lumineux F1, F2 sont mis en forme par des éléments optiques de mise en forme 25, 27 avant d'être diffusés vers un afficheur 30 formant l'image source. L'afficheur 30 est par exemple un écran à cristaux liquides. Les éléments optiques de mise en forme 28, 29 visent à produire des faisceaux lumineux F1, F2 de sections adaptées à la forme de l'afficheur 30. L'afficheur 30 est configuré pour produire des images sources représentant les informations de fonctionnement ou de conduite du véhicule. L'afficheur 30 est muni de préférence d'une couche optique de diffusion 32 ayant une ouverture angulaire prédéterminée.

L'afficheur 30 est configuré de manière à posséder plusieurs zones Z1, Z2 en fonction du type d'information affichée et de la couleur d'affichage dans l'image virtuelle 19. Par exemple, il comporte une première zone Z1 pour afficher les informations principales telles que les indications de changement de direction du système de guidage du véhicule, ou la vitesse instantanée du véhicule, et une seconde zone Z2 pour afficher des informations d'alerte telles que le dépassement des limites de vitesse ou des informations auxiliaires telles que les coordonnées GPS. Bien entendu, l'afficheur 30 pourrait comporter plus de deux zones d'affichage et plus de deux couleurs d'affichage, comme mentionné par exemple en référence à la figure 3.

Les éléments de mise en forme 25, 27 sont configurés de manière à illuminer les zones Z1 et Z2 de l'afficheur 30. L'afficheur 30 et les sources lumineuses 24, 26 sont commandés par une unité électronique (non représentée).

La figure 6 montre l'afficheur 30 comportant les deux zones d'illumination Z1, Z2 et des images sources produites dans chacune de ces zones.

Le combineur diffractif 18 peut également fonctionner en transmission, comme représenté en figure 2. Il est alors agencé entre l'unité de projection 16 et les yeux du conducteur C de manière que le faisceau lumineux provenant de l'image source, en aval de l'unité de projection 16, se diffracte par transmission à travers le combineur diffractif 18 pour produire une image virtuelle 19 située du côté opposé au conducteur C par rapport au combineur diffractif 18.

Avantageusement, le combineur diffractif 18 est une pièce plastique transparente comportant des éléments optiques diffractifs en surface, il est composé d'une seule couche d'une même matière plastique transparente. Les éléments optiques diffractifs sont prévus pour positionner l'image virtuelle 19 holographique à une distance déterminée à l'avant du combineur diffractif 18 et ils sont configurés aussi pour une fonction d'agrandissement de l'image source. Dans une configuration à réflexion telle que représentée en figure 1, le combineur 18 peut être placé contre le pare-brise 15 ou intégré à celui-ci, et il présente alors une transparence plus grande que ledit pare-brise 15.

Le combineur diffractif 18 est réalisé par nanolithographie par interférence laser. Une matrice est d'abord enregistrée en considérant le principe représenté sur la figure 7 où on a représenté une plaque photosensible 36. Sur cette figure, les rayons R1 et R2 représentent les rayons objets et les rayons de référence. Les deux rayons permettent la création d'interférences sur le même côté de la plaque photosensible 36. La plaque utilisée pour l'enregistrement est composée d'un dépôt de résine photosensible en couche uniforme 38 sur une plaque 36 (quartz, silicium, verre...). La plaque 36 sert de support mécanique uniquement. Les interférences de R1 et R2 sur la couche photosensible 38 permettent d'insoler des zones précises de la couche photosensible 38, ce qui modifie la solubilité de la résine dans ces zones. Les zones exposées de la résine photosensible deviennent ainsi plus ou moins solubles par rapport aux autres zones. Une gravure chimique permet la suppression des zones non insolées (ou insolée selon le type de la résine photosensible : négative ou positive) de manière à obtenir une structure diffractive de surface, comme on peut le voir sur la figure 8.

Pour afficher une image virtuelle inclinée lors de l'utilisation du dispositif d'affichage tête haute de l'invention, il suffit de réaliser un montage d'enregistrement dans lequel le faisceau R1 est incliné par rapport à la normale à la surface de la couche photosensible 38 d'un angle correspondant à celui de l'inclinaison que l'on veut obtenir pour l'image virtuelle.

Les valeurs de l'angle $\theta_i$ sont calculées pour correspondre aux différentes longueurs d'onde utilisées dans le rétro-éclairage de l'afficheur 30, en l'occurrence trois puisqu'il y a trois sources de lumière (voir en figure 3). Chaque valeur de l'angle $\theta_i$ est calculée de manière à diffracter la lumière associée à la longueur d'onde $\lambda_i$ d'une zone d'éclairage Z1, Z'1, Z2, Z3, Z'3 et avec une direction bien déterminée.

L'enregistrement se fait en réalisant un seul montage, ensuite la réalisation de la matrice constituée de la plaque 36 et de la couche photosensible 38 se fait en trois enregistrements successifs. Durant la totalité de la procédure d'enregistrement, la couche photosensible 38 est maintenue fixe et la même source laser est utilisé. On commence avec un premier angle $\theta_1$ du faisceau de référence (R2) (qui correspond à longueur d'onde $\lambda_1$ de rétro-éclairage de projecteur). Ensuite, on repositionne le faisceau R2 pour obtenir l'angle $\theta_2$ (qui correspond à la deuxième longueur d'onde de rétro-éclairage). On continue de la même manière pour engendrer le réseau diffractif correspondant à la longueur d'onde $\lambda_3$.

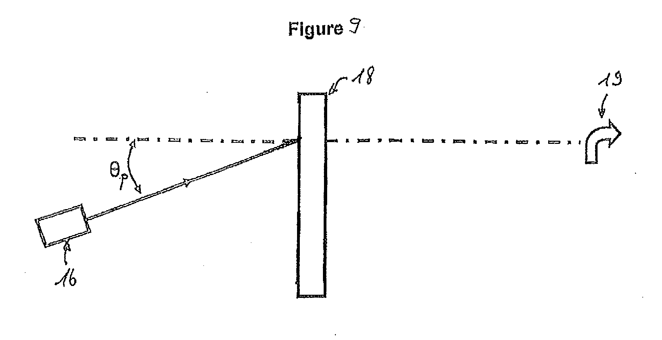

Le choix de l'angle dépend à la fois de l'angle du projecteur $\theta_p$ par rapport à l'axe de vision (voir en figure 9), de la longueur d'onde de la source d'enregistrement $\lambda_c$ et de la longueur d'onde de la zone de rétro-éclairage considérée Z1, Z'1, Z2, Z3, Z'3, la relation donnant $\theta_i$ est la suivante :

$$\theta_i = \arcsin\left(\frac{\lambda_e}{\lambda_i} \cdot \sin\left(\theta_p\right)\right)$$

Le résultat obtenu est un multiplexage de franges d'interférence sur la même couche photosensible 38. Un « développement » de cette couche photosensible exposée 38 par un procédé classique de gravure chimique va permettre dans la suite d'obtenir les réseaux multiplexés sur la surface du combineur 18. C'est cette couche ayant les réseaux en surface qui va servir de matrice utilisable pour réaliser un moule en nickel qui permet de transférer dans une dernière étape les réseaux sur un matériau plastique transparent.

La méthode d'enregistrement précédemment explicitée permet de positionner les ordres de diffraction différents de l'ordre 1 en dehors du champ de vision de conducteur. Seuls les ordres 1 correspondant à chaque longueur d'onde seront placés dans le champ de vision et juxtaposés de manière à reformer les mêmes zones que sur la sortie de projecteur.

L'image virtuelle 19 a une luminance élevée puisque l'efficacité de la diffraction du combineur diffractif est supérieure à 70%.

A partir de la matrice réalisée suivant le procédé ci-dessus, on peut réaliser de manière industrielle reproductible le combineur diffractif par injection plastique ou embossage.

## Revendications

1. Procédé de fabrication d'un combineur diffractif monocouche utilisé dans un dispositif d'affichage tête haute pour véhicule automobile comportant une unité de projection doté d'un afficheur rétro-éclairé par $n \geq 1$ source(s) lumineuse(s) de longueur(s) d'onde $\lambda_i$, i=1 à n, éclairant au moins une zone dudit afficheur, et envoyant un faisceau lumineux vers ledit combineur avec un angle $\Theta_p$, comprenant les étapes suivantes :

    a/ dépôt d'une couche photosensible d'épaisseur uniforme sur une surface plane d'un substrat solide ;
    b/ insolation sur la couche photosensible des franges d'interférence due à l'interférence de deux faisceaux lumineux R1 et R2 provenant d'une source laser ;
    c/ transformation des zones insolées correspondant aux franges d'interférence en variations de relief dans la couche photosensible et fabrication d'un moule reproduisant ces variations ; et
    d/ utilisation dudit moule pour transférer la structure diffractive en relief du substrat sur un élément en matière plastique transparente homogène constituant le combineur diffractif,

    **caractérisé en ce que** l'étape b/ est réalisée n fois, à partir de deux faisceaux lumineux R1 et R2 provenant d'une même source laser de longueur d'onde $\lambda_e$, avec un angle $\Theta_i$, i=1 à n, entre le faisceau R1 et le faisceau R2 égal à

$$\theta_i = \arcsin\left(\frac{\lambda_e}{\lambda_i} \cdot \sin(\theta_p)\right)$$

, l'un des faisceaux interférents étant divergent et présentant un front d'onde sphérique et l'autre étant une onde plane, leur interférence générant un réseau diffractif à pas variable à lignes de contour de franges courbes, et **en ce qu'**un composant réfractif comportant une face plane orientée perpendiculairement à l'axe du faisceau à onde sphérique et une face courbe à différents rayons de courbure est placée sur le trajet du faisceau à onde sphérique, de manière à créer des zones à agrandissement variable sur le combineur diffractif.

2. Procédé de fabrication d'un combineur diffractif selon la revendication précédente, **caractérisé en ce que** ledit composant réfractif est réalisé en matière plastique ou en verre.

3. Procédé de fabrication d'un combineur diffractif selon l'une des revendications précédentes, **caractérisé en ce que** le substrat solide de la matrice est en verre ou en quartz.

4. Procédé de fabrication d'un combineur diffractif selon l'une des revendications précédentes, **caractérisé en ce que** la transformation des zones insolées correspondant aux franges d'interférence en variations de relief comporte les étapes suivantes :

    - application pendant une période prédéterminée d'une substance chimique de gravure sur la couche photosensible exposée pour transformer les franges d'interférence en variation de relief de la couche photorésistante et créer une matrice ;
    - dépôt d'une couche conductrice sur la surface en relief ; et
    - application d'un procédé d'électroformage sur la couche conductrice pour obtenir un moule.

5. Procédé de fabrication d'un combineur diffractif selon la revendication précédente, **caractérisé en ce que** ledit moule est en nickel.

6. Procédé de fabrication d'un combineur diffractif selon l'une des revendications précédentes, **caractérisé en ce que** le transfert de la structure diffractive en relief sur l'élément plastique se fait par des moyens de production en série du type embossage ou injection.

7. Procédé de fabrication d'un combineur diffractif selon l'une des revendications précédentes, **caractérisé en ce que** la matière plastique du combineur a un indice de réflexion permettant d'avoir un niveau de transparence supérieure à celle d'un pare-brise de véhicule.

8. Procédé de fabrication d'un combineur diffractif selon l'une des revendications 4 à 7, **caractérisé par** une application de la substance chimique de gravure sur la couche photosensible pendant une durée qui détermine la profondeur des reliefs à obtenir, dont dépend l'efficacité de la diffraction.

9. Procédé de fabrication d'un combineur diffractif selon l'une des revendications précédentes, **caractérisé en ce qu'**au moins une couche réfléchissante est déposée sur la surface diffractive du combineur.

**10.** Procédé de fabrication d'un combineur diffractif selon la revendication précédente, **caractérisé en ce que** ladite couche réfléchissante présente une sélectivité par rapport à au moins une longueur d'onde du faisceau lumineux émis par l'unité de projection.

**11.** Dispositif d'affichage tête haute pour véhicule automobile destiné à projeter des images, notamment des informations de fonctionnement ou de conduite du véhicule sous la forme d'une image virtuelle située dans le champ de vision du conducteur, comportant une unité de projection et un combineur diffractif fabriqué selon le procédé des revendications 1 à 10.

**12.** Dispositif d'affichage tête haute selon la revendication précédente, **caractérisé en ce que** l'unité de projection comporte un afficheur destiné à former des images source rétro-éclairées par des sources lumineuses d'au moins deux couleurs de longueurs d'onde distinctes, un composant diffractif générant une figure de rétro-éclairage délimitant au moins une zone de l'afficheur étant placé en sortie de chaque source, perpendiculairement à l'axe du faisceau émis par la source, chacune des zones délimitées n'étant rétro-éclairée que par une seule couleur.

**13.** Dispositif d'affichage tête haute selon la revendication précédente, **caractérisé en ce qu'**au moins une source lumineuse est orientée avec un angle $\alpha$ par rapport à la normale au plan de l'afficheur.

**14.** Dispositif d'affichage tête haute selon l'une quelconque des revendications 12 et 13, **caractérisé en ce que** les composants diffractifs placés en sortie des sources de lumière sont des structures multiniveau.

**15.** Dispositif d'affichage tête haute selon l'une quelconque des revendications 11 à 14, **caractérisé en ce que** le combineur diffractif est réalisé sous la forme d'une plaque monomatériau transparente.

**16.** Dispositif d'affichage tête haute selon la revendication précédente, **caractérisé en ce qu'**au moins une face du combineur diffractif est munie d'un revêtement ou d'une couche de protection.

**17.** Dispositif d'affichage tête haute selon l'une quelconque des revendications 12 à 16, **caractérisé en ce que** l'afficheur du dispositif de projection est un écran à cristaux liquides.

**18.** Dispositif d'affichage tête haute selon l'une quelconque des revendications 11 à 16, **caractérisé en ce que** le combineur comporte des éléments optiques diffractifs configurés pour positionner l'image virtuelle à une distance déterminée à l'avant du combineur avec un angle d'inclinaison précis par rapport à l'axe de vision du conducteur.

**19.** Dispositif d'affichage tête haute selon l'une quelconque des revendications 12 à 18, **caractérisé en ce que** les sources de lumière sont des diodes produisant chacune un faisceau lumineux ayant une cohérence spatiale et temporelle.

**20.** Dispositif d'affichage tête haute selon l'une quelconque des revendications 12 à 19, **caractérisé en ce que** l'afficheur formant l'image source est muni d'une couche optique de diffusion ayant une ouverture angulaire prédéterminée.

**Patentansprüche**

**1.** Verfahren zum Herstellen eines einschichtigen diffraktiven Kombinierers, der bei einer Head-Up-Anzeigevorrichtung für ein Kraftfahrzeug Anwendung findet, enthaltend eine Projektionseinheit, die mit einem Display versehen ist, das über $n \geq 1$ Lichtquelle (n) der Wellenlänge(n) $\lambda_i$ hinterleuchtet wird, wobei i = 1 bis n, die zumindest einen Bereich des Displays ausleuchtet und einen Lichtstrahl unter einem Winkel $\theta_p$ zu dem Kombinierer sendet, umfassend die nachfolgenden Schritte :

    a/ Auftragen einer fotosensiblen Schicht mit einheitlicher Dicke auf eine ebene Oberfläche eines festen Substrats;
    b/ Belichten der Interferenzstreifen, bestehend aufgrund der Interferenz von zwei Lichtstrahlen R1 und R2, die von einer Laserquelle stammen, auf der fotosensiblen Schicht;
    c/ Umwandeln der belichteten Bereiche, die den Interferenzstreifen entsprechen, in Reliefänderungen in der fotosensiblen Schicht und Herstellen einer diese Änderungen nachbildenden Gießform; und
    d/ Verwenden der Gießform zum Übertragen der diffraktiven Reliefstruktur des Substrats auf ein Teil aus homogenem, transparentem Kunststoffmaterial, das den diffraktiven Kombinierer bildet,

**dadurch gekennzeichnet, dass** der Schritt b/ n mal anhand von zwei Lichtstrahlen R1 und R2 erfolgt, die von einer gleichen Laserquelle der Wellenlänge $\lambda_e$ stammen, und zwar unter einem Winkel $\theta_i$ zwischen dem Strahl R1 und dem Strahl R2, wobei i=1bis n, der gleich

$$\theta i = \arcsin\left(\frac{\lambda_e}{\lambda_i} \cdot \sin(\theta_p)\right)$$ ist, wobei einer der interferierender Strahlen divergierend ist und eine sphärische Wellenfront aufweist und der andere eine ebene Welle ist, wobei deren Interferenz ein Beugungsgitter mit veränderbarer Teilung mit Umrisslinien von gekrümmten Streifen erzeugt, und dass ein refraktives Element mit einer ebenen Fläche, die senkrecht zur Achse des Strahls mit sphärischer Welle ausgerichtet ist, und einer gekrümmten Fläche mit verschiedenen Krümmungsradien im Strahlengang des Strahls mit sphärischer Welle angeordnet ist, so dass Bereiche mit veränderbarer Vergrößerung auf dem diffraktiven Kombinierer erzeugt werden.

2. Verfahren zum Herstellen eines diffraktiven Kombinierers nach dem vorangehenden Anspruch, **dadurch gekennzeichnet, dass** das refraktive Element aus Kunststoffmaterial oder aus Glas hergestellt ist.

3. Verfahren zum Herstellen eines diffraktiven Kombinierers nach einem der vorangehenden Ansprüche, **dadurch gekennzeichnet, dass** das feste Substrat der Matrix aus Glas oder aus Quarz besteht.

4. Verfahren zum Herstellen eines diffraktiven Kombinierers nach einem der vorangehenden Ansprüche, **dadurch gekennzeichnet, dass** die Umwandlung der den Interferenzstreifen entsprechenden belichteten Bereiche in Reliefänderungen die nachfolgenden Schritte umfasst:

   - Anwenden eines chemischen Ätzstoffs auf die belichtete, fotosensible Schicht für eine vorbestimmte Zeitdauer, um die Interferenzstreifen in Reliefänderungen der fotoresistenten Schicht umzuwandeln und eine Matrix zu erzeugen;
   - Auftragen einer leitfähigen Schicht auf die reliefartige Oberfläche; und
   - Anwenden eines Verfahren zur Elektroformung auf die leitfähige Schicht, um eine Gießform zu erhalten.

5. Verfahren zum Herstellen eines diffraktiven Kombinierers nach dem vorangehenden Anspruch, **dadurch gekennzeichnet, dass** die Gießform aus Nickel besteht.

6. Verfahren zum Herstellen eines diffraktiven Kombinierers nach einem der vorangehenden Ansprüche, **dadurch gekennzeichnet, dass** die Übertragung der reliefartigen, diffraktiven Struktur auf das Kunststoffteil über Mittel zur Massenfertigung durch Prägen oder Spritzen erfolgt.

7. Verfahren zum Herstellen eines diffraktiven Kombinierers nach einem der vorangehenden Ansprüche, **dadurch gekennzeichnet, dass** das Kunststoffmaterial des Kombinierers einen Brechungsindex aufweist, mit dem ein Maß an Transparenz erreicht werden kann, das höher als das einer Windschutzscheibe von Fahrzeugen ist.

8. Verfahren zum Herstellen eines diffraktiven Kombinierers nach einem der Ansprüche 4 bis 7, **gekennzeichnet durch** eine Anwendung des chemischen Ätzstoffs auf die fotosensible Schicht für eine Zeitdauer, welche die Tiefe der zu erhaltenden Reliefs bestimmt, wovon die Beugungseffizienz abhängt.

9. Verfahren zum Herstellen eines diffraktiven Kombinierers nach einem der vorangehenden Ansprüche, **dadurch gekennzeichnet, dass** zumindest eine reflektierende Schicht auf die beugende Oberfläche des Kombinierers aufgetragen wird.

10. Verfahren zum Herstellen eines diffraktiven Kombinierers nach dem vorangehenden Anspruch, **dadurch gekennzeichnet, dass** die reflektierende Schicht eine Selektivität gegenüber zumindest einer Wellenlänge des Lichtstrahls aufweist, der von der Projektionseinheit ausgesendet wird.

11. Head-Up-Anzeigevorrichtung für Kraftfahrzeuge, die dazu bestimmt ist, Bilder, insbesondere Informationen zum Betrieb bzw. Fahren des Fahrzeugs in Form von einem virtuellen Bild, das im Sichtfeld des Fahrers liegt, zu projizieren, enthaltend eine Projektionseinheit und einen diffraktiven Kombinierer, der nach dem Verfahren von Anspruch 1 bis 10 hergestellt ist.

12. Head-Up-Anzeigevorrichtung nach dem vorangehenden Anspruch, **dadurch gekennzeichnet, dass** die Projektionseinheit ein Display aufweist, das dazu bestimmt ist, Ursprungsbilder zu erzeugen, die von Lichtquellen mit zumindest zwei Farben unterschiedlicher Wellenlängen hinterleuchtet werden, wobei ein diffraktives Element, das eine Form in der Hinterleuchtung erzeugt, die zumindest einen Bereich des Displays begrenzt, am Austritt einer jeden Quelle senkrecht zur Achse des von der Quelle ausgesandten Strahls angeordnet ist, wobei jeder der begrenzten Bereiche mit nur einer einzigen Farbe hinterleuchtet wird.

13. Head-Up-Anzeigevorrichtung nach dem vorangehenden Anspruch, **dadurch gekennzeichnet, dass** zumindest eine Lichtquelle unter einem Winkel $\alpha$ bezüglich der Normalen zur Ebene des Displays ausgerichtet ist.

14. Head-Up-Anzeigevorrichtung nach einem der Ansprüche 12 und 13, **dadurch gekennzeichnet, dass** die am Austritt der Lichtquellen angeordneten diffraktiven Elemente mehrstufige Strukturen sind.

15. Head-Up-Anzeigevorrichtung nach einem der Ansprüche 11 bis 14, **dadurch gekennzeichnet, dass** der diffraktive Kombinierer in Form von einer transparenten Platte aus Monomaterial hergestellt ist.

16. Head-Up-Anzeigevorrichtung nach dem vorangehenden Anspruch, **dadurch gekennzeichnet, dass** zumindest eine Seite des diffraktiven Kombinierers mit einem Überzug oder einer Schutzschicht versehen ist.

17. Head-Up-Anzeigevorrichtung nach einem der Ansprüche 12 bis 16, **dadurch gekennzeichnet, dass** das Display der Projektionsvorrichtung eine Flüssigkristallanzeige ist.

18. Head-Up-Anzeigevorrichtung nach einem der Ansprüche 11 bis 16, **dadurch gekennzeichnet, dass** der Kombinierer diffraktive optische Elemente aufweist, die dazu konfiguriert sind, das virtuelle Bild in einem bestimmten Abstand auf die Vorderseite des Kombinierers unter einem präzisen Neigungswinkel bezüglich der Blickrichtung des Fahrers zu positionieren.

19. Head-Up-Anzeigevorrichtung nach einem der Ansprüche 12 bis 18, **dadurch gekennzeichnet, dass** die Lichtquellen Dioden sind, die jeweils einen Lichtstrahl mit einer räumlichen und zeitlichen Kohärenz erzeugen.

20. Head-Up-Anzeigevorrichtung nach einem der Ansprüche 12 bis 19, **dadurch gekennzeichnet, dass** das Display, welches das Ursprungsbild bildet, mit einer optischen Streuschicht mit einer vorbestimmten Winkelbreite versehen ist.

**Claims**

1. Process for manufacture of a single-layer diffractive combiner used in a head-up display device for a motor vehicle including a projection unit provided with a display backlit by n≥1 light source(s) of wavelength (s) $\lambda_i$, i=1 to n, illuminating at least one zone of the said display, and sending a light beam towards the said combiner with an angle $\theta_p$, comprising the following steps:

   a/ deposition of a photosensitive layer of uniform thickness on a flat surface of a solid substrate;
   b/ exposure on the photosensitive layer of the interference fringes due to the interference of two light beams R1 and R2 emanating from a laser source;
c/ transformation of the exposed zones corresponding to the interference fringes into relief variations in the photosensitive layer and manufacture of a mould reproducing these variations; and
d/ use of the said mould to transfer the diffractive relief structure from the substrate onto an element made of homogenous transparent plastics material forming the diffractive combiner,

**characterised by** the fact that the step b/is performed n times, from two light beams R1 and R2 emanating from a same laser source of wavelength λe with an angle θi, i=1 to n, between the beam R1 and the beam R2 equal to

$$\theta_i = \arcsin\left(\frac{\lambda_e}{\lambda_i} \cdot \sin\left(\theta_p\right)\right)\text{,}$$ one of the interfering beams being divergent and presenting a spherical wavefront and the other being a plane wave, their interference generating a diffraction grating of variable pitch with curved fringe contour lines, and by the fact that a refractive component including a flat face orientated perpendicularly to the axis of the beam with a spherical wave and a face curved at different radii of curvature is placed in the path of the beam with a spherical wave so as to create zones of variable enlargement on the diffractive combiner.

2. Process for manufacture of a diffractive combiner as described in the preceding claim, **characterised by** the fact that the said refractive component is made of plastics material or of glass.

3. Process for manufacture of a diffractive combiner as described in one of the preceding claims, **characterised by** the fact that the solid substrate of the matrix is made of glass or of quartz.

4. Process for manufacture of a diffractive combiner as described in one of the preceding claims, **characterised by** the fact that the transformation of the exposed zones corresponding to the interference fringes into relief variations includes the following steps:

   - application for a predetermined period of a chemical engraving substance to the exposed photosensitive layer to transform the interference fringes into relief variations of the photoresistant layer and create a matrix;
   - deposition of a conductive layer on the relief surface; and
   - application of an electro-forming process to the conductive layer to obtain a mould.

5. Process for manufacture of a diffractive combiner as described in the preceding claim, **characterised by** the fact that the said mould is made of nickel.

6. Process for manufacture of a diffractive combiner as described in one of the preceding claims, **characterised by** the fact that the transfer of the diffractive relief structure onto the plastics element is effected by mass production means of the embossing or injection type.

7. Process for manufacture of a diffractive combiner as described in one of the preceding claims, **characterised by** the fact that the plastics material of the combiner has an index of reflection permitting a transparency level greater than that of a vehicle windscreen.

8. Process for manufacture of a diffractive combiner as described in one of claims 4 to 7, **characterised by** an application of the chemical engraving substance to the photosensitive layer for a period which determines the depth of the reliefs to be obtained, upon which the diffraction efficiency depends.

9. Process for manufacture of a diffractive combiner as described in one of the preceding claims, **characterised by** the fact that at least one reflective layer is deposited on the diffractive surface of the combiner.

10. Process for manufacture of a diffractive combiner as described in the preceding claim, **characterised by** the fact that the said reflective layer presents a selectivity relative to at least one wavelength of the light beam emitted by the projection unit.

11. Head-up display device for motor vehicle intended to project images, particularly operating or driving information of the vehicle in the form of a virtual image situated within the field of view of the driver, including a projection unit and a diffractive combiner manufactured in accordance with the process of claims 1 to 10.

12. Head-up display device as described in the preceding claim, **characterised by** the fact that the projection unit includes a display intended to form source images backlit by light sources of at least two colours of distinct wavelengths, a diffractive component generating a backlighting figure defining at least one zone of the display being placed at the output of each source, perpendicularly to the axis of the beam emitted by the source, each of the defined zones only being backlit by a single colour.

13. Head-up display device as described in the preceding claim, **characterised by** the fact that at least one light source is orientated with an angle a relative to the normal to the plane of the display.

14. Head-up display device as described in any one of claims 12 and 13, **characterised by** the fact that the diffractive components placed at the output of the light sources are multilevel structures.

15. Head-up display device as described in any one of claims 11 to 14, **characterised by** the fact that the diffractive combiner is made in the form of a transparent single-material plate.

16. Head-up display device is described in the preceding claim, **characterised by** the fact that at least one face of the diffractive combiner is provided with a protective coating or layer.

17. Head-up display device as described in any one of claims 12 to 16, **characterised by** the fact that the display of the projection device is a liquid crystal screen.

18. Head-up display device as described in any one of claims 11 to 16, **characterised by** the fact that the combiner includes diffractive optical elements configured to position the virtual image at a determined distance in front of the combiner with a precise angle of incline relative to the viewing axis of the driver.

19. Head-up display device as described in any one of claims 12 to 18, **characterised by** the fact that the light sources are diodes each producing a light beam having a spatial and temporal coherence.

20. Head-up display device as described in any one of claims 12 to 19, **characterised by** the fact that the display forming the source image is provided with an optical diffusion layer having a predetermined angular aperture.

## Figure 1

## Figure 2

Figure 3

Figure 4

Figure 5

Figure 6

**Figure 7**

Figure 8

Figure 9

**EP 2 376 969 B1**

## RÉFÉRENCES CITÉES DANS LA DESCRIPTION

### Documents brevets cités dans la description

- JP 10048562 B
- EP 0467328 A
- US 4930847 A
- US 6005714 A
- WO 200409090607 A
- US 20050200962 A